# EUROPÄISCHE PATENTSCHRIFT

(11) **EP 1 483 921 B1**
(45) Veröffentlichungstag und Bekanntmachung des Hinweises auf die Patenterteilung: **25.10.2006**
(21) Anmeldenummer: 03704295.9
(22) Anmeldetag: 04.02.2003
(51) Int. Cl.: H04Q 7/22

(54) **VERFAHREN ZUR ORTSABHÄNGIGEN MOBILEN KOMMUNIKATION**
METHOD FOR LOCATION-DEPENDENT MOBILE COMMUNICATION
PROCEDE DE COMMUNICATION PAR TELEPHONIE MOBILE DEPENDANT DU LIEU

(30) Priorität: 11.03.2002 DE 10210598; 15.10.2002 DE 10248011
(43) Veröffentlichungstag der Anmeldung: 08.12.2004
(73) Patentinhaber: Vodafone Holding GmbH, 40213 Düsseldorf (DE)
(72) Erfinder: HERTLE, Jochen, 85521 Ottobrunn (DE)
(74) Vertreter: Müller, Thomas
(86) Internationale Anmeldenummer: PCT/DE2003/000316
(87) Internationale Veröffentlichungsnummer: WO 2003/077574

(56) Entgegenhaltungen:
- EP-A- 1 102 501
- EP-A- 1 213 904
- WO-A-00/04730
- WO-A-02/13571
- DE-A- 10 022 692

## Beschreibung

Die vorliegende Erfindung betrifft ein Verfahren zur ortsabhängigen mobilen Kommunikation von Nutzern eines Informations-Übertragungssystems, insbesondere eines Mobilfunksystems, wobei jedem Nutzer zumindest zeitweilig wenigstens eine mobile Endeinrichtung zugeordnet ist. Weiterhin wird ein System beschrieben, das insbesondere zur Realisierung des Verfahrens geeignet ist.

Es ist bekannt, dass zum Beispiel Mobilfunkteilnehmer durch Anrufen eines bestimmten Dienstes Anfragen beziehungsweise Abfragen tätigen können, um Informationen zu einem bestimmten Ort zu erhalten. Dieses System ist auch aus dem Internet bekannt, wobei über ein sogenanntes Such-Profil Informationsdaten über gezielt ausgewählte Orte oder Gegenstände erhalten werden können.

Weiterhin ist im Automobilbereich ein Navigationssystem bekannt, bei dem über Satelliten die Position des Nutzers des Navigationssystems ermittelt wird (GPS) und welches nach Eingabe eines Zielortes anhand der Daten eines Straßenplanspeichers die Streckenführung berechnet. Aktuelle Verkehrssituationen können beispielsweise über RDS (Radio Data System) oder über das Internet in der Streckenberechnung berücksichtigt werden.

Es ist aber kein Verfahren beziehungsweise System bekannt, bei dem ein Nutzer eines Informations-Übertragungssystems einem Ort zugeordnete Informationsdaten erhalten kann, wenn er sich an diesem Ort befindet, die vorher von einem anderen Nutzer des Informations-Übertragungssystems an diesem Ort hinterlegt worden sind.

Aus der DE 100 22 692 A1 ist ein Benachrichtigungsdienst für lokale und passende Angebote bekannt. In der DE 100 22 692 A1 wird die Problematik des Zusammenbringens von Angeboten mit passenden Interessenten beschrieben. Aufgabe der DE 100 22 692 A1 ist es ferner eine richtige Person zur richtigen Zeit am richtigen Ort mit einer Information zu versorgen. Als Lösung für die Problematik ist eine Schaltzentrale (Zentraleinheit) vorzusehen, in welcher Angebots- und Interessenprofile von Personen abgespeichert sind. Die Profile werden dynamisch gehandhabt, wobei beispielsweise auf Änderungen des Aufenthaltsorts Rücksicht genommen werden kann. Die Lokalisierung der Personen kann durch Lokalisierung der den Personen zugeordneten mobilen Endgeräte erfolgen.

Aus der DE 100 22 692 A1 ist bekannt, Interessenten-/Absenderprofile mit Ortsdaten zu verknüpfen. Die Profile sind in einer Datenbank abgespeichert und werden in einer Zentraleinheit (der Schaltzentrale) miteinander verglichen. Die Ortsdaten können dabei aus dem Zellfunknetz, beispielsweise einem GSM-Netz, gewonnen werden. Gibt es Überschneidungen bei den Profilen, wird zwischen den Profilinhabern ein Kontakt hergestellt, oder es wird eine Benachrichtigung gegeben. Die dafür erforderlichen Komponenten sind in Spalte 4, Zeilen 36 bis 42 der DE 100 22 692 A1 beschrieben.

Bei der in der DE 100 22 692 A1 beschriebenen Lösung fungiert die Zentraleinheit somit als Vermittler von Informationen beziehungsweise Kontakten.

Aus der WO 00/04730 ist offenbart, wie so genannte Location Based Services (LBS) gestartet werden. Die Positionen mobiler Endgeräte werden ermittelt und an eine Zentraleinheit übertragen. Der Nutzer übermittelt eine Nachricht an die Zentraleinheit, dass er einen bestimmten LBS starten möchte. Dieser wird dann aktiviert und auf der Basis der ermittelten Positionsdaten entsprechend ausgeführt.

Ferner sind aus der WO 02/13571 A1 so genannte "event-based advertisements" bekannt. D.h., die WO 02/13571 A1 beschreibt eine Methode und eine System um veranstaltungsbasierte Werbung einem Mobilfunkteilnehmer zukommen zu lassen.

Aus den drei zuvor genannten Dokumenten des Standes der Technik ist bekannt standortbezogene Informationsdaten entweder durch so genanntes Pull-Verfahren oder ein so genanntes Push-Verfahren von einer Zentraleinheit zu einer mobilen Endeinrichtung zu übermitteln.

Keines der Dokumente des Standes der Technik ist so ausgelegt, dass der Nutzer der mobilen Endeinrichtung eine Wahlmöglichkeit hat mittels seiner Endeinrichtung zu bestimmen, wie und wann er Informationsdaten erhält.

Aufgabe der Erfindung ist es daher, ein Verfahren zu schaffen, bei dem Nutzer eines Informations-Übertragungssystems Informationsdaten an einem Ort hinterlegen können und diese Informationsdaten einem anderen Nutzer des Informations-Übertragungssystems übermittelt werden können, wenn er sich an dem Ort aufhält. Ferner soll der Nutzer bestimmten können, wie und wann er die Informationsdaten erhält.

Diese Aufgabe wird gelöst durch das Verfahren mit den Merkmalen gemäß den unabhängigen Patentansprüchen 1 und 2 sowie durch die Vorrichtung mit den Merkmalen gemäß dem unabhängigen Patentanspruch 23. Weitere Vorteile, Merkmale, Details, Aspekte und Effekte der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten dabei selbstverständlich auch für die erfindungsgemäße Vorrichtung, und umgekehrt.

Die Aufgabe wird gemäß dem ersten Aspekt der Erfindung dadurch gelöst, dass ein oder mehrere Nutzer/Absender elektronisch Informationsdaten erzeugt/erzeugen und diese über die ihm/ihnen zugeordnete(n) Endeinrichtung(en) an wenigstens eine Zentraleinheit übertragen werden, dass über ein Standort-Ermittlungsverfahren automatisch der Standort derjenigen Endeinrichtung(en) an wenigstens eine Zentraleinheit übertragen werden, dass über ein Standort-Ermittlungsverfahren automatisch der Standort derjenigen Endeinrichtung(en) bestimmt wird, von der/denen die Informationsdaten übertragen werden, dass die Informationsdaten mit den ermittelten Standortdaten in der Zentraleinheit automatisch verknüpft werden und dass die Informationsdaten von der Zentraleinheit standortbezogen zur Verfügung gestellt werden, derart, dass diese standortbezogenen Informationsdaten von der Zentraleinheit wenigstens einem anderen Nutzer des Informations-Übertragungssystems zur Verfügung gestellt werden, wenn für die Endeinrichtung dieses Nutzers über das Standort-Ermittlungsverfahren der gleiche Standort und/oder eine Ort in der Umgebung des Standorts wie bei der/den Endeinrichtung(en) des/der Absender(s) ermittelt worden ist, über den die Informationsdaten hinterlegt sind, wobei die standortbezogenen Informationsdaten entweder automatisch von der Zentraleinheit an die Endeinrichtung(en) übermittelt werden, sog. "Push-Verfahren", oder durch die Endeinrichtung(en) angefordert und dann von der Zentraleinheit übermittelt werden, sog. "Pull-Verfahren", wobei der Nutzer unter Zuhilfenahme seiner Endeinrichtung zwischen dem "Push-Verfahren" und dem "Pull-Verfahren" wählt.

Gemäß einem zweiten Aspekt der Erfindung wird die Aufgabe dadurch gelöst, dass ein oder mehrere Nutzer/Absender elektronisch Informationsdaten erzeugt/erzeugen und diese über die ihn/ihnen zugeordnete(n) Endeinrichtung(en) an wenigstens eine Zentraleinheit übertragen werden, dass über ein Standort-Ermittlungsverfahren automatisch der Standort derjenigen Endeinrichtung(en) bestimmt wird, von der/denen die Informationsdaten übertragen werden, dass die Informationsdaten mit den ermittelten Standortdaten in der Zentraleinheit automatisch verknüpft werden und dass die Informationsdaten von der Zentraleinheit standortbezogen zur Verfügung gestellt werden, derart, dass diese standortbezogenen Informationsdaten von der Zentraleinheit wenigstens einem anderen Nutzer des Informations-Übertragungssystems zur Verfügung gestellt werden, wenn dieser Nutzer über die ihm zugeordnete(n) Endeinrichtung(en) die Standortdaten eines Standortes der Zentraleinheit übermittelt, wobei die standortbezogenen Informationsdaten entweder automatisch von der Zentraleinheit an die Endeinrichtung(en) übermittelt werden, sog. "Push-Verfahren", oder durch die Endeinrichtung(en) angefordert und dann von der Zentraleinheit übermittelt werden, sog. "Pull-Verfahren", wobei der Nutzer unter Zuhilfenahme seiner Endeinrichtung zwischen dem "Push-Verfahren" und dem "Pull-Verfahren" wählt.

Hierdurch wird ein Verfahren geschaffen, bei dem Nutzer eines Informations-Übertragungssystems ortsabhängig Informationsdaten hinterlegen können und diese Informationsdaten einem anderen Nutzer des Informations-Übertragungssystems übermittelt werden können, wenn er sich an dem Ort aufhält.

Es ist also ein Verfahren zur Ermöglichung einer neuartigen mobilen Kommunikation. Teile des Verfahrens sind aus dem Internet vorbekannt und werden von Instant Messaging Teilnehmern genutzt (Anruf über Such-Profil). Das Neuartige ist, dass der Ort, an welchem beziehungsweise für welchen man Informationsdaten beziehungsweise Nachrichten (Sprache, Bild oder Daten, usw.) hinterlässt, eine entscheidende Funktion darin hat. Diese Verwendung des Orts ist aus den Internetanwendungen nicht bekannt.

Im weiteren Verlauf wird noch ein System beschrieben, mit dem beispielsweise dieses Verfahren durchgeführt werden kann.

Die Zentraleinheit weist beispielsweise einen oder mehrere Computer beziehungsweise Rechnereinheiten, ein Computer-Netzwerk, wenigstens eine Servereinrichtung oder dergleichen auf.

Ein Kernpunkt des Verfahrens ist, dass der Absender von Informationsdaten beziehungsweise einer Nachricht nicht notwendigerweise einen speziellen Empfänger auswählt, sondern die Nachricht dem Informations-Übertragungssystem, beispielsweise dem Mobilfunksystem, übergeben wird. Beispielsweise werden die Daten an die Zentraleinheit übertragen und in dieser weiterverarbeitet. Dieses System erfasst dabei den Ort, an welchem die Nachricht beziehungsweise die Informationsdaten aufgegeben wurde(n) und speichert diese Nachricht beziehungsweise die Informationsdaten unter diesem Ort beziehungsweise unter den Koordinaten dieses Ortes.

Vorteilhaft ist, dass für die Nutzer mobile Endeinrichtungen zur Verfügung stehen. Die Nachricht beziehungsweise die Informationsdaten werden vom Nutzer des Informations-Übertragungssystems über zumindest eine mobile Endeinrichtung, insbesondere über ein Mobilfunkgerät, an die Zentraleinheit übertragen.

Das Verfahren ermöglicht ortsabhängige Sprach- und/oder Daten-Kommunikation zwischen Kunden eines Informations-Übertragungssystems, beispielsweise eines Mobilfunkunternehmens beziehungsweise zwischen Geräten mit Verbindung zu einem Mobilfunknetz. Das Verfahren bringt neuen Nutzen für die Mobilfunkteilnehmer und erhöht damit die Nutzung des Mobilfunknetzes und der angebotenen Dienste.

Der Standort der Nutzer des Informations-Übertragungssystems kann beispielsweise über ein geeignetes Standort-Ermittlungsverfahren ermittelt werden. Vorzugsweise können die Standortdaten mittels eines GSM basierten Standort-Ermittlungsverfahrens und/oder mittels eines auf Satellitenortung basierenden Standort-Ermittlungsverfahrens (etwa GPS oder dergleichen) ermittelt werden. Die Kommunikation zwischen den mobilen Endeinrichtungen und der Zentraleinheit kann beispielsweise via zellularem Mobilfunk (etwa GPRS oder dergleichen) erfolgen.

Zur Ortung mobiler Endeinrichtungen über bestimmte Standort-Ermittlungsverfahren sind bereits verschiedene Lösungen bekannt geworden. So ist in der DE 198 03 960, deren Offenbarungsgehalt insoweit in die Beschreibung der vorliegenden Erfindung mit einbezogen wird, ein Verfahren und System zur Benutzung von modernen Ortungssystemen in Mobilfunksystemen beschrieben. Die Ortung eines Mobiltelefons kann beispielsweise auch nach dem EOTD-Verfahren (Enhanced Observed Time Difference) erfolgen. Dabei werden Laufzeitunterschiede von Signalen eines Mobiltelefons zu mehreren Sendern gemessen. Aus den ermittelten Werten kann dann unter Verwendung geeigneter Algorithmen automatisch der Standort des Mobiltelefon ermittelt werden.

Gemäß dem ersten Aspekt werden die standortbezogenen Informationsdaten von der Zentraleinheit anderen Nutzern des Informations-Übertragungssystems zur Verfügung gestellt, wenn für die Endeinrichtungen dieser Nutzer über das Standort-Ermittlungsverfahren der gleiche Standort und/oder ein Ort in der Umgebung des Standorts wie bei der/den Endeinrichtung(en) desjenigen Nutzers ermittelt worden ist, über den die Informationsdaten hinterlegt sind, wobei die besagten Standortdaten vorteilhaft zusammen mit den Informationsdaten hinterlegt wurden. Das heißt, befindet sich ein Nutzer an einem Standort, über den standortbezogene Informationsdaten in der Zentraleinheit hinterlegt worden sind, werden diese dem Nutzer von der Zentraleinheit zur Verfügung gestellt. Es muss eine Überschneidung des Ortes vorliegen. Ändert ein Nutzer seinen Standort, werden im die Informationsdaten des vorherigen Ortes nicht mehr zur Verfügung gestellt, sondern die Informationsdaten des neuen Standortes. Die Zentraleinheit ermittelt den jeweiligen Standort des Nutzers und stellt automatisch die Informationsdaten, die zu diesem Ort hinterlegt worden sind, dem Nutzer zur Verfügung.

Gemäß dem zweiten Aspekt werden die standortbezogenen Informationsdaten von der Zentraleinheit anderen Nutzern des Informations-Übertragungssystems zur Verfügung gestellt, wenn die Nutzer über die ihnen zugeordneten Endeinrichtungen die Standortdaten eines Standorts der Zentraleinheit übermitteln. Hierdurch können einem Nutzer des Systems auch Informationsdaten eines Ortes zur Verfügung gestellt werden, wenn er sich nicht an dem entsprechenden Ort aufhält. Er muss über eine Endeinrichtung die Standortkoordinaten des Standorts eingeben, über den er Informationsdaten erhalten möchte. Er muss also diejenigen Standortkoordinaten des Ortes kennen, die durch das Standortermittlungsverfahren ermittelt worden wären, wenn er sich an dem Ort aufhalten würde. Auf diese Art und Weise kann der Nutzer des Systems Informationsdaten beziehungsweise Nachrichten erhalten, die für ihn an diesem Standort zur Verfügung stehen würden.

Günstig ist es, dass von dem Absender der standortbezogenen Informationsdaten ein Absenderprofil, welches absenderspezifische Daten, wie z.B. Geschlecht, Alter, Größe, Anschrift, Beruf, Interessen, Hobbys, Haarfarbe, Geburts- oder Wohnort, Arbeitgeber, Zugehörigkeit zu einer Gruppe und dergleichen enthält, erzeugt werden kann. Die Zentraleinheit speichert die entsprechenden Merkmale des Absenders. Hierdurch ist der Absender von Informationsdaten charakterisierbar. Das Absenderprofil dient zum einen dem Systemanbieter, um Informationen über den Absender der Informationsdaten zu erhalten, andererseits anderen Nutzer die nur Informationsdaten von Absendern mit bestimmten Merkmalen erhalten möchten.

Beispielsweise ist es denkbar, dass das von einem Absender erzeugte Absenderprofil immer dann an die Zentraleinheit übermittelt wird, wenn der Absender standortbezogene Informationsdaten generiert. Ebenso ist es denkbar, dass ein Absender, wenn er sich beispielsweise zum ersten Mal bei dem genannten Dienst anmeldet, ein Absenderprofil erzeugt, welches anschließend in der Zentraleinheit abgespeichert wird. Wenn nun der Absender standortbezogene Informationsdaten erzeugt hat und diese an die Zentraleinheit übertragen will, kann die Zentraleinheit die bereits vorliegenden Absenderprofildaten diesem Absender nach dessen Identifizierung automatisch zuordnen.

Ebenfalls vorteilhaft ist, dass von dem Absender der standortbezogenen Informationsdaten ein Empfängerprofil, durch das der Absender vorgibt für welche Empfänger die standortbezogenen Informationsdaten vorgesehen sind, erzeugt wird. Wiederum ist es möglich, dass der Absender immer dann, wenn er standortbezogene Informationsdaten erzeugt hat, auch ein Empfängerprofil erzeugt, welches er zusammen mit den standortbezogenen Informationsdaten an die Zentraleinheit übermittelt. Natürlich ist es auch denkbar, dass der Absender einmal ein bestimmtes Empfängerprofil erzeugt und dieses Empfängerprofil anschließend in der Zentraleinheit abgelegt wird. Wenn nun der Absender standortbezogene Informationsdaten erzeugt, werden diese in der Zentraleinheit automatisch mit dem entsprechenden Empfängerprofil verknüpft, sodass nur solche Nutzer Zugriff auf die standortbezogenen Informationsdaten erhalten, die dem jeweiligen Empfängerprofil entsprechen. Hierdurch kann ein standortbezogenes Informationspaket nur bestimmten Nutzern zur Verfügung gestellt werden. Der Absender gibt vor, für welchen Nutzer beziehungsweise welche Gruppe von Nutzern die Informationsdaten zu dem bestimmten Standort bestimmt ist. Natürlich ist es auch denkbar, dass der Nutzer mehr als ein Empfängerprofil generiert. Hierdurch trifft der Absender eine Vorauswahl über mögliche Empfänger. Er kann beispielsweise nur einem einzigen Nutzer oder allen Nutzern eine Nachricht an einem Ort hinterlassen. Dies bedeutet, dass entweder nur die entsprechende Person, für die die Informationsdaten bestimmt sind diese erhalten kann, oder alle Nutzer die Informationsdaten erhalten können, wenn sie sich an diesem Ort befinden, über den die Daten hinterlassen wurden.

Das Empfängerprofil kann empfängerspezifische Daten, wie z.B. Geschlecht, Alter, Größe, Anschrift, Beruf, Interessen, Hobbys, Haarfarbe, Geburts- oder Wohnort, Arbeitgeber, Zugehörigkeit zu einer Gruppe, und dergleichen enthalten.

So kann beispielsweise ein Veranstalter Informationen über seinen Standort hinterlegen, die nur für Personen bestimmt sind, die besondere spezifische Merkmale aufweisen, um so gezielt an diese Gruppe von Personen heranzutreten.

Das System, insbesondere die Zentraleinheit, speichert das Absenderprofil zusammen mit der Nachricht, dem Ort und dem Empfängerprofil ab.

Die standortbezogenen Informationsdaten können entweder automatisch von der Zentraleinheit an die Endeinrichtung(en) übermittelt werden, sogenanntes "Push-Verfahren", oder durch die Endeinrichtung(en) angefordert und dann übermittelt werden, sogenanntes "Pull-Verfahren". Beim "Push-Verfahren" werden die standortbezogenen Informationsdaten automatisch an die Endeinrichtungen von Nutzern übermittelt, wenn sie sich an dem Standort aufhalten, über den die Daten gespeichert wurden. Sobald ein Nutzer in den näheren Umkreis des Standorts gelangt, werden im die Informationsdaten über diesen Standort übermittelt.

Geht ein Nutzer des Systems beispielsweise in ein Lokal, werden ihm Informationsdaten, die über das Lokal in der Zentraleinheit enthalten sind, übermittelt.

Beim "Pull-Verfahren" erhält der Nutzer die standortbezogenen Informationsdaten nicht automatisch, sondern erst dann, wenn er sie über seine Endeinrichtung, insbesondere sein Mobilfunkgerät, von der Zentraleinheit anfordert. Er sendet eine Anfrage an die Zentraleinheit, welche dann die entsprechenden Daten übermittelt.

Der Nutzer hat also die Wahl zwischen beiden Varianten. Möchte er nicht zwangsweise die standortbezogenen Informationsdaten erhalten, wird er das sogenannte "Pull-Verfahren" bevorzugen.

Damit ein Nutzer nicht von Informationsdaten unnötigerweise überschüttet wird, insbesondere wenn er seinen Standort schnell wechselt, ist es vorteilhaft, dass eine automatische Übermittlung der standortbezogenen Informationsdaten im "Push-Verfahren" an die Endeinrichtung(en) eine vorherige generelle Aktivierung der Zentraleinheit erfordert. Dadurch kann der Nutzer bestimmen, ob er überhaupt Informationsdaten erhalten möchte oder nicht. Er aktiviert die Zentraleinheit über seine Endeinrichtung dahingehend, dass er ab Zeitpunkt der Aktivierung standortbezogene Informationsdaten erhalten möchte. Die Zentraleinheit überprüft, ob eine Aktivierung durch eine Endeinrichtung existiert und sendet bei vorliegender Aktivierung die jeweiligen standortbezogenen Informationsdaten an diese Endeinrichtung. Hierdurch erhält der Nutzer der Endeinrichtung permanent Informationen beziehungsweise Nachrichten über die entsprechenden Orte, an denen er sich aufhält.

Auf der anderen Seite ist es günstig, dass eine Übermittlung der standortbezogenen Informationsdaten im "Pull-Verfahren" an die Endeinrichtung(en) jeweils eine gesonderte Aktivierung der Zentraleinheit erfordert. Der Nutzer der Endeinrichtung kann durch gezielte Aktivierung der Zentraleinheit bestimmen, wann er standortbezogene Informationsdaten erhalten möchte. Hält er sich an einem Ort auf, über den er Informationen erhalten möchte, aktiviert er die Zentraleinheit, die im dann die entsprechenden Informationen, die an und über diesen Ort hinterlegt worden sind, zusendet. Der Nutzer selbst bestimmt, wann er Informationen über bestimmte Standorte von der Zentraleinheit übermittelt bekommen möchte. Im Vergleich zum "Push-Verfahren" erhält er die jeweiligen standortbezogenen Informationsdaten nicht automatisch, wenn er sich an einem Ort aufhält, sondern erst dann, wenn er eine gesonderte Aktivierung durchführt. Durch diese Art der Informationsabfrage kann der Nutzer unterbinden, dass ihm permanent Informationen übermittelt werden, wenn er ständig seinen Standort wechselt.

Vorteilhaft ist weiterhin, dass mit Aktivierung der Zentraleinheit ein Nutzerprofil mit an die Zentraleinheit übermittelt werden kann, welches vorgibt welche spezifischen standortbezogenen Informationsdaten der Nutzer beziehen möchte. Ebenso kann vorgesehen sein, dass mit Aktivierung der Zentraleinheit ein Nutzerprofil von der Zentraleinheit aus wenigstens einer Speichereinrichtung ausgewählt werden kann, welches vorgibt, welche spezifischen standortbezogenen Informationen der Nutzer beziehen möchte.

Dieses Nutzerprofil kann sowohl bei einer generellen Aktivierung, als auch bei einer gesonderten Aktivierung der Zentraleinheit übermittelt werden. Der Nutzer hat die Möglichkeit selbst festzulegen, was für eine Art von standortbezogenen Informationsdaten er erhalten möchte. Er kann beispielsweise vorgeben, von wem er Informationen erhalten möchte. Dazu kann er aus der Vielzahl der Informationsdaten über einen Standort, die in der Zentraleinheit gespeichert sind, wählen. Über die Endeinrichtung gibt der Nutzer sein gewünschtes Profil ein, die Zentraleinheit vergleicht dieses mit den dort hinterlegten Informationen und übermittelt bei Übereinstimmung der Daten mit dem gewünschten Nutzerprofil diese an den Nutzer. Zum Beispiel kann der Nutzer in dem Nutzerprofil vorgeben von welchem Absender er standortbezogene Informationen beziehungsweise Nachrichten erhalten möchte. Dies kann er dadurch machen, dass er zum Beispiel eine Telefonnummer oder einen Namen im Nutzerprofil vorgibt. Alle Informationen, die von dem Absender mit diesem Namen beziehungsweise dieser Telefonnummer in der Zentraleinheit gespeichert sind, werden dann dem Nutzer übermittelt, soweit der Absender durch das Empfängerprofil nicht vorgegeben hat, dass diesem Nutzer nicht übermittelt werden soll.

Ebenfalls von Vorteil ist es, wenn sich der Nutzer vor Erhalt von standortbezogenen Informationsdaten bei der Zentraleinheit registrieren lassen muss, insbesondere sein persönliches Profil, wie zum Beispiel Geschlecht, Alter, Anschrift und dergleichen, angeben muss. Die Betreiber des Informations-Übertragungssystems können so jeden Nutzer erfassen, der an dem Informations-Übertragungssystem teilnehmen möchte.

Hierbei ist es vorteilhaft, dass die standortbezogenen Informationsdaten dem/den Nutzer(n) erst dann von der Zentraleinheit übermittelt werden, wenn sie sich bei der Zentraleinheit registriert haben lassen, wenn die Zentraleinheit von ihnen aktiviert worden ist und wenn sie sich entweder an demselben Standort aufhalten, wo auch die standortbezogenen Informationsdaten vom Absender übertragen wurden oder sie die Standortdaten eines Standorts an die Zentraleinheit übermittelt haben. Erst wenn die zuvor erwähnten Bedingungen erfüllt sind, übermittelt die Zentraleinheit die standortbezogenen Informationsdaten an den Nutzer weiter.

Eine weitere mögliche Alternative ist, dass die standortbezogenen Informationsdaten dem/den Nutzer(n) erst dann von der Zentraleinheit zugestellt werden, wenn Nutzerprofil und Empfängerprofil ganz oder zumindest in einem gewissen Grad übereinstimmen. Die Zentraleinheit überprüft ständig, ob Übereinstimmungen zwischen Nutzerprofil und Empfängerprofil vorliegen. Bei völliger Übereinstimmung wird die gespeicherte Information über einen Standort dem Nutzer unmittelbar zugestellt. Der Grad der Übereinstimmung, ab wann zugestellt werden soll, ist sowohl vom Absender, als auch vom Empfänger individuell einstellbar. So kann der Absender in seinem abgegebenen Empfängerprofil vorgeben, dass zugestellt werden soll, wenn der Nutzer beispielsweise 3 von 5 Merkmalen, die der Absender vorgegeben hat, erfüllt. Umgekehrt kann auch der Nutzer vorgeben, dass er nur dann Informationsdaten übermittelt bekommen möchte, wenn beispielsweise mehr als 50% der Merkmale seines Nutzerprofils bei einem Empfängerprofil vorliegen. So kann beispielsweise vom Absender von standortbezogenen Informationsdaten vorgeben werden, dass diese Daten nur an weibliche Nutzer im Alter von 25-30 Jahren die in München wohnen weitergegeben werden sollen. Andererseits kann ein Nutzer durch sein Nutzerprofil bestimmen, dass er nur Informationsdaten von einem Standort haben möchte, die von Personen hinterlassen worden sind, die zwischen 40 und 42 Jahre alt sind und die aus diesem Standort kommen. Die Zentraleinheit überprüft Merkmal für Merkmal die eingehenden Nutzerprofile und Empfängerprofile und sendet je nach Grad der Übereinstimmung zwischen diesen die standortbezogenen Informationsdaten den Nutzer zu.

Günstig ist weiterhin, dass vom Absender und vom Nutzer bestimmt werden kann, ab welcher räumlichen Entfernung zum jeweiligen Standort die standortbezogenen Informationsdaten übermittelt werden. Das heißt, Absender und Nutzer können vorgeben, dass die standortbezogenen Informationsdaten nur dann von der Zentraleinheit übermittelt werden sollen, wenn der Nutzer sich näher als eine bestimmte Entfernung von diesem Standort aufhält. Ein Lokalbesitzer kann beispielsweise festlegen, dass Nutzern bestimmte Sonderangebote übermittelt werden, wenn sie sich näher als 10 Meter dem Lokal genähert haben. Aber auch der Nutzer kann vorgeben, dass er erst Informationen erhalten möchte, wenn er sich im Umkreis von beispielsweise 15 Metern von dem Standort entfernt aufhält. Die Genauigkeit dieser Einstellung hängt von dem Standortermittlungsverfahren ab. Je genauer die Position der Nutzer ermittelt werden kann, umso genauer ist die Einstellmöglichkeit des Entfernungsparameters. Die Ermittlung der Position kann beispielsweise mittels des GSM-Verfahrens, mittels eines satellitengestützten Positions-Ermittlungsverfahrens und dergleichen ermittelt werden.

Der Absender kann jederzeit das Empfängerprofil und der Nutzer jederzeit das Nutzerprofil ändern. Ein Nutzer kann auch mehrere Nutzerprofile bei der Zentraleinheit hinterlegen.

Von großem Vorteil ist auch die Möglichkeit, dass der Absender der standortbezogenen Informationsdaten den Zeitraum bestimmen kann, innerhalb dessen diese von der Zentraleinheit an andere Nutzer übermittelt werden können. So kann er beispielsweise genau vorgeben bis zu welchem Zeitpunkt seine Nachricht möglichen Nutzern zur Verfügung gestellt werden soll. Auf diese Art und Weise kann vermieden werden, dass längst überholte Informationsdaten einem Nutzer zugehen. Ein Händler kann so genau bestimmen, dass ausgewählte Angebote nur in einem bestimmten Zeitraum den Nutzern zugänglich sind.

Ebenso so vorteilhaft ist, dass der Nutzer, der die standortbezogenen Informationsdaten empfangen möchte, bestimmen kann, von welchem Zeitraum und in welchem Zeitraum er die standortbezogenen Informationsdaten empfangen möchte. Hierdurch kann der Nutzer vermeiden, dass ihm veraltete, nicht mehr aktuelle standortbezogene Informationsdaten zugestellt werden. Durch diese Einstellungsmöglichkeit kann der Nutzer erreichen, dass ihm nur die aktuellsten, neuesten Informationen oder Nachrichten übermittelt werden. Der Nutzer kann aber auch einen älteren zurückliegenden Zeitraum wählen und so gezielt nach bestimmten Nachrichten oder Informationen suchen.

Durch die Möglichkeit Profile vorzugeben, können Absender und Empfänger bestimmen, für wen beziehungsweise von wem die standortbezogenen Informationsdaten übermittelt werden sollen. Eine ganz bestimmte Zielgruppe kann auf diese Art und Weise ausgewählt werden.

Von Vorteil ist außerdem, dass Absender und Nutzer ein oder mehrere Empfängerbeziehungsweise Nutzerprofil(e) an die Zentraleinheit übermitteln können, die sie wahlweise einzeln oder gleichzeitig aktivieren können. Hierdurch muss nicht jedes Mal ein neues Profil an die Zentraleinheit übermittelt werden, sondern es kann auf bereits bespeicherte Profile zurückgegriffen werden. Entweder werden sie nur einfach aktiviert oder sie werden abgeändert auf die neuen Bedürfnisse der jeweiligen Person. Dies erspart dem Erzeuger der Profile eine Menge Zeit. Die Zentraleinheit kann für einen Nutzer eine große Menge an Profilen speichern, auf die er jederzeit zurückgreifen kann. Hierdurch ist eine vereinfachte Eingabe von Profilen beziehungsweise Abfrage möglich.

Ideal ist es, wenn alle Profile der Absender und der Nutzer des Informations-Übertragungssystems über eine Internetverbindung an die Zentraleinheit des Informations-Übertragungssystems übermittelt werden können. So kann der Absender einer Nachricht diese im nachhinein ergänzen, abändern oder wieder löschen. Dies erspart ihm die langwierige Eingabe mittels einer Endeinrichtung, insbesondere mit Hilfe eines Mobilfunkgeräts. Er kann an einem Standort eine Nachricht erzeugen - beispielsweise mit Hilfe eines Personal Computers, seiner Endeinrichtung oder dergleichen - und an die Zentraleinheit übermitteln und diese später über Internet bearbeiten. Ebenso kann ein Nutzer sämtliche Profile via Internet an die Zentraleinheit übersenden. Dies schafft ihm eine einfachere und bequemere Möglichkeit der Eingabe von Daten und Profilen. So kann jeder Absender oder Nutzer sein Portfolio an standortbezogenen Informationsdaten beziehungsweise Profilen, wie Absender-, Empfänger- oder Nutzerprofilen, ständig auf einfache Art und Weise pflegen und aktualisieren. Ein nachträgliches Ergänzen per Internet vermeidet eine eventuell schwierige, langwierige Eingabe per Endeinrichtung.

Mit dem oben beschriebenen Verfahren lassen sich standortbezogenen Informationsdaten, wie insbesondere Sprach-, SMS-, MMS-, Bild-, Video-, Text-, WAP- oder ähnliche Nachrichten, leicht übermitteln.

Besonders vorteilhaft zur Durchführung des oben beschriebenen Verfahrens ist eine Vorrichtung beziehungsweise ein Informations-Übertragungssystem, insbesondere eine Zentraleinheit, die eine Vorrichtung zum Lokalisieren von Absendern von standortbezogenen Informationsdaten sowie zum Lokalisieren von Nutzern des Informations-Übertragungssystems, zumindest einen Speicher für Registrierungen und Profile der Absender beziehungsweise Nutzer sowie eine Recheneinheit, die bei Übereinstimmung von Empfänger- und Nutzerprofilen dem Nutzer die standortbezogenen Informationsdaten zuordnet, wenn sich der Nutzer an dem entsprechenden Standort aufhält, aufweist.

Bei der Zentraleinheit handelt es sich vorteilhaft um eine Computereinheit, wie sie weiter oben bereits dargestellt worden ist. Als Vorrichtung zum Lokalisieren von Absendern von standortbezogenen Informationsdaten sowie zum Lokalisieren von Nutzern des Informations-Übertragungssystems kann eine Vorrichtung zum Lokalisieren, wie beim GSM-Verfahren, genutzt werden. Die Lokalisierung kann auch mittels eines Satellitensystems (zum Beispiel GPS) geschehen, wodurch eine besonders genaue Positionsbestimmung möglich ist. Geeignete Verfahren zum Lokalisieren der Nutzer sind weiter oben bereits beschrieben worden. Wahlweise kann ein Speicher oder auch mehrere Speicher genutzt werden, um die Profile, die standortbezogenen Informationsdaten sowie andere Daten zum speichern. Wenigstens eine Recheneinheit, die insbesondere Bestandteil der Zentraleinheit ist, überprüft alle Profile, Aktivierungen, Registrierungen sowie die standortbezogenen Informationsdaten und ordnet die Daten bei Übereinstimmungen der Profile automatisch den jeweiligen Nutzern zu und überträgt diese an die Nutzer.

Weiterhin ist es vorteilhaft, wenn die Vorrichtung Mittel zur Durchführung oben beschriebenen Verfahrens aufweist. Insbesondere können idealerweise Mobiltelefone, aber auch Laptops, Notebooks oder digitale Organizer, als Endeinrichtungen genutzt werden.

Weitere Einzelheiten und Vorteile des Verfahrens ergeben sich aus der nachfolgenden Beschreibung, den zugehörigen Zeichnungen, in der ein bevorzugtes Ablaufschema des Verfahrens mit den dazu notwendigen Einzelheiten dargestellt ist.
Es zeigen:
- Fig.1:: Übermittlung der standortbezogenen Informationsdaten durch den Absender an die Zentraleinheit sowie Lokalisierung des Standorts des Absenders durch die Zentraleinheit;
- Fig.2:: Lokalisierung des Standorts eines Nutzers durch die Zentraleinheit;
- Fig.3:: Aktivierung der Endeinrichtung eines Nutzers sowie Übermittlung eines Nutzerprofils an die Zentraleinheit; und
- Fig.4:: Übermittlung der standortbezogenen Informationsdaten an einen Nutzer durch die Zentraleinheit.

Die vier Figuren stellen einen möglichen Ablauf des Verfahrens dar. Das Informations-Übertragungssystem 1 - beispielsweise ein Mobilfunksystem - weist zumindest zwei Endeinrichtungen 3, 5 und eine Zentraleinheit 4 auf, wobei die Endeinrichtung 3 dem Absender 11 von standortbezogenen Informationsdaten und die Endeinrichtung 5 dem Nutzer beziehungsweise Empfänger 12 der standortbezogenen Informationsdaten zugeordnet ist. Bei den Endeinrichtungen 3, 5 handelt es sich im vorliegenden Beispiel um Mobiltelefone, die Zentraleinheit 4 ist als wenigstens ein Computer ausgebildet.

In allen Figuren stellt der Kreis einen bestimmten Standort 2 dar. Die Zentraleinheit 4 weist Mittel auf, mit denen der Standort 2 des Absenders 11 und auch der Nutzer 12 jederzeit sofort feststellbar ist. Weiterhin weist die Zentraleinheit 4 eine Recheneinheit auf, die die standortbezogenen Informationsdaten mit den ermittelten Standortdaten in der Zentraleinheit 4 automatisch verknüpft und die bei Übereinstimmung von Empfänger- und Nutzerprofilen dem Nutzer 12 die standortbezogenen Informationsdaten zuordnet, wenn sich der Nutzer 12 an dem entsprechenden Standort 2 aufhält.

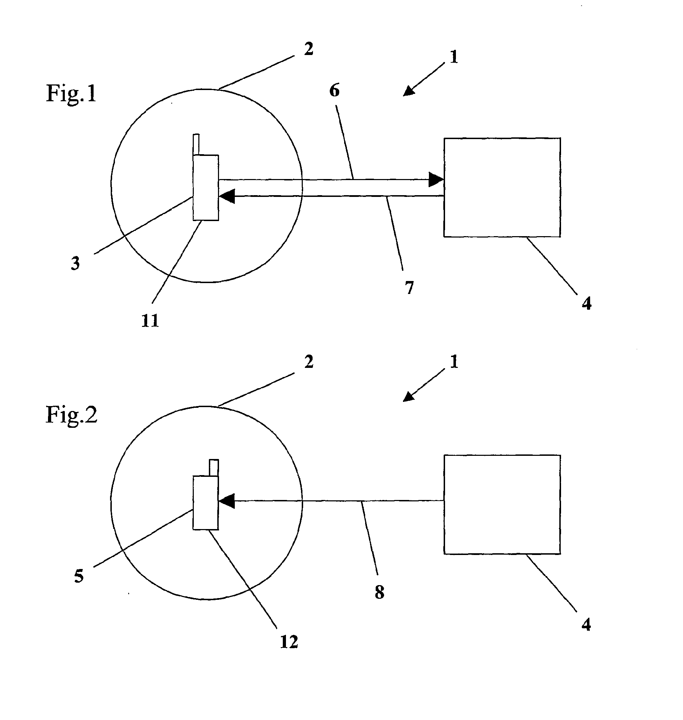

In Fig.1 erzeugt der Absender 11 mit Hilfe einer ihm zugeordneten Endeinrichtung 3, insbesondere eines Mobiltelefons, Informationsdaten und überträgt 6 diese an die Zentraleinheit 4. Die Zentraleinheit 4 bestimmt über ein Standort-Ermittlungsverfahren 7 automatisch der Standort 2 derjenigen Endeinrichtung 3, von der die Informationsdaten übertragen worden sind, und verknüpft die übertragenen Informationsdaten mit den ermittelten Standortdaten in der Zentraleinheit 4 automatisch. Der Standort der Endeinrichtung 3 kann beispielsweise mittels eines GSM- und/oder GPS - basierten Standort-Ermittlungsverfahren ermittelt werden. In der Zentraleinheit 4 werden diese Daten gespeichert und möglichen Nutzern zur Verfügung gestellt. Der Absender kann zusätzlich zu den Informationsdaten sein Absenderprofil und auch ein Empfängerprofil an die Zentraleinheit 4 übertragen 6. Natürlich ist es auch denkbar, dass das Absenderprofil und/oder das Empfängerprofil vom Absender nur einmal erstellt und an die Zentraleinheit (4) übertragen wird. In diesem Fall werden die Profile vorteilhaft in einer davon geeigneten Speichereinrichtung abgespeichert. Wenn nun der Absender von der Zentraleinheit (4) identifiziert worden ist, kann diese den Informationsdaten automatisch das entsprechende Absender- bzw. Empfängerprofil zuordnen, was den Aufwand für den Absender erheblich reduziert.

Begibt sich ein Nutzer 12 mit einer ihm zugeordneten Endeinrichtung 5 in das Umfeld des Standorts 2 stellt die Zentraleinheit 4 dies mit Hilfe des Standort-Ermittlungsverfahrens 8 automatisch unmittelbar fest, siehe Fig.2. Über das Standort-Ermittlungsverfahren 7 wird die Position der Endeinrichtung 5 eines jeden Nutzers 12 jederzeit automatisch festgestellt (autonom bei dem sogenannten "Push-Verfahren", auf Anfrage beim sogenannten "Pull-Verfahren").

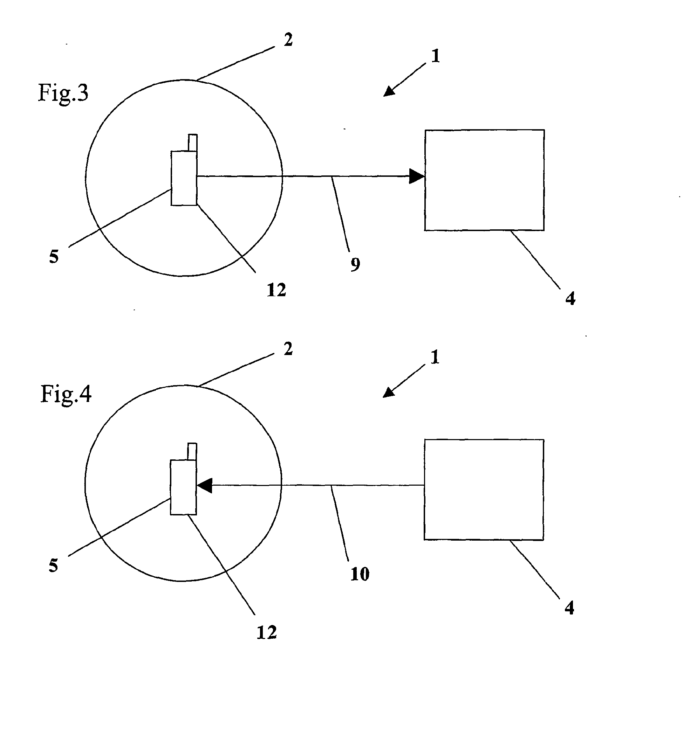

Möchte der Nutzer 12 an dem Informations-Übertragungssystem 1 teilnehmen, aktiviert 9 er die ihm zugeordnete Endeinrichtung 5 bei der Zentraleinheit 4, siehe Fig. 3. Mit der Aktivierung kann er auch sein Nutzerprofil an die Zentraleinheit 4 übermitteln 9. Das Nutzerprofil gibt vor, welche spezifischen standortbezogenen Informationsdaten der Nutzer 12 von der Zentraleinheit 4 beziehen möchte. Das Nutzerprofil ist vorteilhaft in der Zentraleinheit 4 gespeichert. Nachdem von der Recheneinheit der Zentraleinheit 4 gänzliche oder teilweise Übereinstimmung zwischen dem Empfängerprofil und dem Nutzerprofil festgestellt worden ist, siehe Figur 4, übermittelt 10 diese standortbezogene Informationsdaten an die dem Nutzer 12 zugeordnete Endeinrichtung 5. Die standortbezogenen Informationsdaten bzw. Nachrichten werden einem oder mehreren Teilnehmern 12 des Informations-Übertragungssystems 1 zugestellt.

Mittels des Verfahrens kann man beispielsweise mit Teilnehmern eines Mobilfunknetzes kommunizieren, deren Rufnummer man nicht kennt.

Das kann beispielsweise geschehen, wenn bestimmte Bedingungen erfüllt sind. Nachfolgend werden einige nichtausschließliche Beispiele für Bedingungen beschrieben, ohne daß die Erfindung darauf beschränkt wäre:
a) die potentiellen Empfänger haben ihr Einverständnis zum Empfang solcher Nachrichten gegeben (d.h., die persönlichen Profile der Teilnehmer wurden erfaßt (=Registrierung) und sie haben den Dienst zu diesem Zeitpunkt aktiviert (=Aktivierung));
b) Die potentiellen Empfänger befinden sich an demselben Ort, wo auch die Nachricht vom Absender aufgegeben wurde (zumindest in der Nähe, abhängig von der Genauigkeit der Ortsbestimmung des Mobilfunksystems und abhängig von dem Suchbereich, welcher als Parameter des Dienstes einstellbar ist);
c) Die Profile der potentiellen Empfänger zeigen einen gewissen Grad der Übereinstimmung mit dem Empfängerprofil, welches zusammen mit der Nachricht abgespeichert wurde. Der gewünschte Grad der Übereinstimmung kann von den Teilnehmern als persönlicher Parameter eingestellt werden (z.B. 50% Übereinstimmung).

Sind die gewählten Bedingungen erfüllt, so können die Nachrichten den passenden Empfängern zugestellt werden. Dabei gibt es unterschiedliche Varianten. Nachfolgend werden zwei nichtausschließliche Beispiele genannt, ohne daß die Erfindung darauf beschränkt wäre:
1) Der potentielle Empfänger fragt beim System, beispielsweise beim Mobilfunksystem nach passenden Nachrichten an ('Pull');
2) Das System, beispielsweise das Mobilfunksystem, stellt passende Nachrichten automatisch zu (,Push').

Jeder Teilnehmer an diesem Kommunikationssystem kann bestimmen, ob er die Push und/oder Pull Variante bevorzugt.

Bestimmte Parameter können jederzeit unter Zuhilfenahme der mobilen Endeinrichtung geändert werden, beispielsweise Aktivierung/Deaktivierung des Dienstes, Wahl zwischen "Push-" oder "Pull-Verfahren", Einstellen des gewünschten Grades der Übereinstimmung (0-100%), Einstellen des Suchbereiches, innerhalb dessen Nachrichten als 'passend' erscheinen (zum Beispiel im Radius von 10-1000 m) und dergleichen. Die Erfindung ist nicht auf die genannten Beispiele beschränkt.

Als Nachrichtentypen werden beispielsweise unterstützt: Sprache (ähnlich der Mailbox), SMS, WAP Seiten, Multi-media Messages (MMS), Bilder, Video-Clips, Fax, und dergleichen. Natürlich sind auch andere Nachrichtentypen denkbar. Das System, beispielsweise das Mobilfunksystem entscheidet selbständig, welcher Typ von Nachricht zu dem jeweiligen Endgerät paßt. Der Absender hat die Möglichkeit, mehrere unterschiedliche Formate seiner Nachricht zu hinterlegen, um möglichst viele verschiedene Typen von Empfangsgeräten zu erreichen.

Der Absender kann zudem die Möglichkeit haben, einen Zeitraum anzugeben, innerhalb dessen die Nachricht zustellbar ist (z.B. eine Woche lang, jeden Morgen zwischen 10 und 11 Uhr).

Das System, beispielsweise das Mobilfunksystem kann jeder Nachricht eine bestimmte maximale Gültigkeitsdauer zuweisen, um eine übermäßige Anhäufung von Nachrichten zu verhindern.

Weiterhin kann vorgesehen sein, daß der Benutzer vorab eine persönliche Dateiliste von Empfängerprofilen hinterlegt. Beim Senden einer neuen Nachricht wählt er aus dieser Liste nur noch das passende Empfängerprofil aus. Dies erspart ihm umständliche Dateneingaben bei der Nutzung des Dienstes.

Vorteilhaft sollte es für jeden Teilnehmer möglich sein, eine Dateiliste von unerwünschten Absendern anzugeben (Sperrliste). Das System, beispielsweise das Mobilfunksystem stellt dann an diesen Teilnehmer keine Nachrichten von in der Sperrliste eingetragenen Absendern mehr zu, auch wenn die sonstigen Kriterien erfüllt wären.

In weiterer Ausgestaltung kann ein Web-Zugang vorgesehen sein zur Registrierung bei diesem Dienst und zur Eingabe komplexerer Daten wie z.B. das persönliche Profil, die Sperrlisten oder zum Hinterlegen einer Liste von Empfängerprofilen und dergleichen.

Diese völlig neuartige Art der mobilen Kommunikation stimuliert in hohem Maße die Nutzung des Systems, beispielsweise des Mobilfunksystems. Man kann Nachrichten an Orten hinterlassen, ohne konkret bestimmte Empfänger vorab auszuwählen. Für Empfänger von Nachrichten kann dies in hohem Maße nützlich oder unterhaltsam sein. Die Möglichkeit der Zustellung per "Push-Verfahren" ist sehr bequem und erhöht die Nutzungsbereitschaft.

Nichtausschließliche Anwendungsbeispiele sind etwa:
1) Hinterlassen von Bewertungen von besuchten Restaurants;
2) selbsterstellte Bilder (Photos/Videos) analog zu Sprüh-Bildern (Grafiti, Tagging) auf Wänden;
3) Warnhinweise wie z.B. Ölspuren auf Straßen;
4) geheime Botschaften zwischen Jugendlichen innerhalb ihrer Gemeinschaften;
5) Anweisungen an Teilnehmer eines Suchspieles ("virtuelle Schnitzeljagd");
6) Unterhaltendes wie Anekdoten, Witze und dergleichen;
7) Zusatzinformationen zu Sehenswürdigkeiten (virtuelle Schilder);
8) Zusatzinformationen zu Werbeplakaten (z.B. der Link zu einer Internetseite 'klebt' direkt am Werbeplakat, so daß ein davor stehender Teilnehmer mit nur einem Klick die Seite des Anbieters aufsuchen kann);
9) rein virtuelle Werbung, passend zum Ort, an welchem sie empfangbar ist.

Dabei ist die Erfindung selbstverständlich nicht auf die genannten Beispiele beschränkt.

Ein weiterer wichtiger Vorteil ist gegeben durch die Tatsache, daß keine speziellen Anforderungen an die Endgeräte gestellt werden. Wenn das Verfahren in einem Mobilfunksystem eingesetzt wird, kann man bereits mit jedem gewöhnlichen Sprachtelefon daran teilnehmen.

Vorteilhaft ist zudem, daß der Systembetreiber, beispielsweise der Mobilfunkbetreiber, lediglich den Mechanismus für diese Kommunikation zur Verfügung stellen kann, und keine speziellen Anwendungen dafür entwickeln und bewerben muss. Die Kreativität der Benutzer alleine wird ausreichen, um einen hohen Nutzungsgrad zu erzielen.

Zur Realisierung eines Systems, welches dieses als Dienst ausgebildete Verfahren implementiert, sind eine Reihe zentraler Komponenten im System, beispielsweise im Mobilfunksystem erforderlich. Einige Komponenten werden nachfolgend beschrieben. Es ist jedoch selbstverständlich, daß einige der Komponenten optional sind, so daß sie zur grundsätzlichen Realisierung des Systems nicht zwingend erforderlich sind:
- Wenigstens ein zentraler Speicher für abgesendete Nachrichten (ähnlich dem Mailboxsystem, jedoch erweitert, so daß alle möglichen Formate von Nachrichten gespeichert werden können, zusammen mit den notwendigen Parametern wie Absendeort, Empfängerprofil, Zeitraum für Zustellung und dergleichen) und für die Erfassung der Teilnehmer an diesem neuen Dienst (zum Beispiel Datenbank). Gespeicherte Daten umfassen das persönliche Profil, Aktiv/Inaktiv Kennung, vordefinierte Liste von Suchprofilen, Sperrlisten, Suchbereich/-radius, Übereinstimmungsgrad für Profile, "Push"/"Pull" Kennung und dergleichen;
- Wenigstens eine Einrichtung zum Lokalisieren von Nutzern, beispielsweise von Mobilfunkteilnehmern (in vielen Mobilfunknetzen bereits vorhanden);
- Wenigstens ein Verfahren zur Standortermittlung;
- Wenigstens ein Web-Zugangsserver zur Registrierung und Pflege der persönlichen Daten;
- Wenigstens ein Anwendungsrechner, welcher den Dienst implementiert, das heißt, welcher regelmäßig die Orte der Teilnehmer des Dienstes ermittelt, im Nachrichtenspeicher nach passenden Nachrichten sucht und bei Übereinstimmung und bei Erfülltsein der Zustellungsbedingungen die Nachricht zustellt ("Push Verfahren"). Beim "Pull-Verfahren" wird der Anwendungsrechner in der Zentraleinheit vom Teilnehmer direkt aufgefordert, unmittelbar nach passenden Nachrichten zu suchen und diese dann zuzustellen.

Neben den vorgenannten Merkmalen, Details und Aspekten läßt sich die Erfindung auch wie folgt beschreiben:

Die vorliegende Erfindung geht aus von einer Ausdrucksform, die auch als "Tagging" bezeichnet wird. Beim "Tagging" werden Informationen für andere Personen an bestimmten Orten hinterlassen. Tags sind in der Regel einzigartig und individuell.

Das "Tagging" ist beispielsweise aus der "Sprayer-Szene" bekannt. Das "Tag" ist die Signatur des Sprayers. Tags werden von anderen Mitgliedern einer Gruppierung (Community) wiedererkannt. Tags sagen aus "Ich war hier". Bei derartigen Tags handelt es sich aber auch um bereits sehr alte Ausdrucksformen. Derartige klassische Tags erfüllten grundsätzliche Kommunikationsbedürfnisse und hatten in der Regel eine bestimmte Bedeutung für die Mitglieder einer Kultur oder einer Population.

Das Konzept des Taggings besteht aus einer Reihe von Komponenten, von denen einige nachfolgend aufgelistet sind:
- Ein Tag ist eine Nachricht (Text, Bild, Video, Audio und dergleichen);
- Ein Tag ist einem bestimmten Ort zugeordnet ("tagged")
- Ein Tag wird durch Individuen erstellt;
- Ein Tag kann eine anonyme Nachricht sein;
- Ein Tag kann an eine bestimmte Gruppe von Leuten und/oder an Gemeinschaften gerichtet sein;
- Der Inhalt eines Tags wird von Leuten gelesen, die sich am Ort seiner Entstehung befinden;
- Das Tagging ist ein Verfahren für asynchrone Kommunikation;
- Das Tagging kann verschiedene Zwecke haben, beispielsweise Information, Spaß, Spiele, Kunst, persönliche Ausdrucksform, spezielle Funktionen und dergleichen.

Durch das erfindungsgemäße Verfahren kann die Ausdrucksform des Tagging nunmehr auch in einem Informations-Übertragungssystem angewendet werden.

Dazu werden zunächst Informationen erzeugt. Der Sender erzeugt zunächst Informationen, beispielsweise Text-, Sprach-/Audio-, Bild-, Video-Informationen und dergleichen, und wählt optional ein Empfängerprofil aus (beispielsweise männlich/weiblich, Alter, Gemeinschaft und dergleichen). Die Informationen werden an eine Zentraleinheit übertragen. Die Informationen werden, vorteilhaft zentral, gespeichert und zwar zusammen mit dem Ort des Senders und optional mit Profilinformationen des Senders und möglicher Empfänger.

Ein Nutzer des Systems kann die gespeicherten, standortbezogenen Informationen beispielsweise von der Zentraleinheit abrufen ("Pull-Verfahren"). Informationen werden dann zugestellt, wenn der Ort und optional das Profil passen.

Die gespeicherten Informationen können Empfängern, bei denen Übereinstimmungen festgestellt werden, auch automatisch zugestellt werden ("Push-Verfahren").

Nachfolgend werden einige nichtausschließliche Beispiele für mögliche Informationen beschrieben, die mit dem erfindungsgemäßen Verfahren erzeugt und in entsprechender Weise bereitgestellt werden können:

"Dieses Restaurant bietet exzellente Pizza an". Solche Informationen können beispielsweise an jeden Nutzer des Systems gerichtet werden. "Marlene, ich liebe Dich". Für eine solche Information wird beispielsweise ein Empfängerprofil ausgewählt, daß am besten auf besagte Marlene paßt. Als Ort, an dem die Information standortbezogen angeboten wird, kann beispielsweise ein Ort gewählt werden, der von Marlene häufig frequentiert wird. "Dyslexies of the world! Untie!". Bei solchen Informationen handelt es sich um typische Spaßinformationen. "Schau nach einer grünen Tür in einem weißen Gebäude und tritt ein". Solche Informationen können als Bestandteil von Abenteuer-, Rollen-, Suchspielen und dergleichen erzeugt werden. Weiterhin könnten Informationen auch als kleine Kunstbilder, Video-und Audioclips und dergleichen erzeugt werden. Die Informationen können sich an interessierte Gruppen richten und beispielsweise als MMS zur Verfügung gestellt werden. Bei den letztgenannten Informationen handelt es sich dann um eine Art virtueller Graffiti.

Die Erfordernisse zur Durchführung eines solchen Verfahrens können wie folgt beschrieben werden. Zunächst muß ein Ort bestimmt werden. Je genauer der Ort festgelegt werden kann, desto mehr Gebrauchsfälle sind möglich. Dann müssen die Informationen gespeichert werden. Hierzu kann insbesondere ein großer zentraler Speicher für alle möglichen Arten von Informationen vorgesehen sein. Der Speicher kann etwa Bestandteil eines "Unified Messenging Systems" sein. Es sollte vorteilhaft eine vollständige Nutzerkontrolle über den Service möglich sein, zum Beispiel das Editieren persönlicher Profile, das Aktivieren/Deaktivieren des Services, die "Push"/"Pull"-Auswahl, das Erzeugen "schwarzer Listen", das Aktivieren sogenannter "Spamming Filter" und dergleichen. Weiter sollte die Schaffung von Gemeinschaften durch die Nutzer selbst einfach möglich sein (Namenswahl der Gemeinschaft + Liste von MS-ISDNs eingeschlossen).

Das erfindungsgemäße Verfahren erfüllt sehr grundlegende Kommunikationsbedürfnisse. Die Nutzer definieren beispielsweise für sich selbst, welche Nutzungsanwendungen für sie selbst sinnvoll sind. Weiterhin wird die Kreativität der Nutzer stimuliert.

Die Plattform für ein solches Verfahren kann beispielsweise durch einen Mobilfunkbetreiber installiert und betrieben werden. Die Nutzer erzeugen ihren eigenen Inhalt. Dritte sind dazu nicht erforderlich. Gleiche Anwendungsgebiete sind auch für SMS und MMS denkbar.

Weitere nichtausschließliche Merkmale des Verfahrens können sein, daß jede Information eine bestimmte Lebensdauer erhält und nach dem Zeitablauf gelöscht wird. So werden nur neue und aktuelle Informationen standortbezogen zur Verfügung gestellt. Jeder Nutzer kann Empfängerprofile vorbestimmen, beispielsweise unter Verwendung eines "Web-Front-Ends". Später können diese vorgefertigten Profile ausgewählt werden, was den Bedienaufwand am Endgerät des Nutzers, beispielsweise einem Mobiltelefon, erheblich reduziert. Die Nutzer können auswählen, ob sie die "Push"- und/oder "Pull"-Übertragung von Informationen bevorzugen. Die Nutzer können auch den Ortsradius bestimmen. Wenn der Radius groß ist, werden mehr Informationen auf das Orts-Auswahl-Erfordernis passen. Die Nutzer können den erforderlichen Grad zur Übereinstimmung des Profils (1...100%) selbst einstellen. So können die Nutzer kontrollieren, ob sie eine große Anzahl von Informationen, oder aber nur wenige, ausgewählte Informationen erhalten möchten.

Das System zur Durchführung des Verfahrens ist vorteilhaft so ausgebildet, daß es Informationen automatisch in ein solches Format bringt, das für die als Empfangsgerät ausgebildete Endeinrichtung geeignet ist (UM-Fähigkeit).

## Patentansprüche

1. Verfahren zur ortsabhängigen mobilen Kommunikation von Nutzern (11, 12) eines Informations-Übertragungssystems (1), insbesondere eines Mobilfunksystems, wobei jedem Nutzer (11, 12) zumindest zeitweilig wenigstens eine mobile Endeinrichtung (3, 5) zugeordnet ist, wobei ein oder mehrere Nutzer/Absender (11) elektronisch Informationsdaten erzeugt/erzeugen und diese über die ihm/ihnen zugeordnete(n) Endeinrichtung(en) (3) an wenigstens eine Zentraleinheit (4) übertragen (6) werden, wobei über ein Standort-Ermittlungsverfahren automatisch der Standort (2) derjenigen Endeinrichtung(en) bestimmt wird (7), von der/denen die Informationsdaten übertragen werden, wobei die Informationsdaten mit den ermittelten Standortdaten in der Zentraleinheit (4) automatisch verknüpft werden, und wobei die Informationsdaten von der Zentraleinheit (4) standortbezogen zur Verfügung gestellt werden (10), derart, dass diese standortbezogenen Informationsdaten von der Zentraleinheit (4) wenigstens einem anderen Nutzer (12) des Informations-Übertragungssystems (1) zur Verfügung gestellt werden (10), wenn für die Endeinrichtung dieses Nutzers über das Standort-Ermittlungsverfahren der gleiche Standort (2) oder ein Ort in der Umgebung des Standorts wie bei der/den Endeinrichtung(en) (3) des/der Absender(s) (11) ermittelt worden ist (8), über den die Informationsdaten hinterlegt sind,
**dadurch gekennzeichnet,**
**dass** die standortbezogenen Informationsdaten entweder automatisch von der Zentraleinheit (4) an die Endeinrichtung(en) (5) übermittelt werden (10), sog. "Push-Verfahren", oder durch die Endeinrichtung(en) (5) angefordert und dann von der Zentraleinheit (4) übermittelt werden (10), sog. "Pull-Verfahren", wobei der Nutzer unter Zuhilfenahme seiner Endeinrichtung (5) zwischen dem "Push-Verfahren" und dem "Pull-Verfahren" wählt.

2. Verfahren zur ortsabhängigen mobilen Kommunikation von Nutzern (11, 12) eines Informations-Übertragungssystems (1), insbesondere eines Mobilfunksystems, wobei jedem Nutzer (11, 12), zumindest zeitweilig wenigstes eine mobile Endeinrichtung (3, 5) zugeordnet ist, wobei ein oder mehrere Nutzer/Absender (11) elektronisch Informationsdaten erzeugt/erzeugen und diese über die ihn/ihnen zugeordnete(n) Endeinrichtung(en) (3) an wenigstens eine Zentraleinheit (4) übertragen (6) werden, wobei über ein Standort-Ermittlungsverfahren automatisch der Standort (2) derjenigen Endeinrichtung(en) bestimmt wird (7), von der/denen die Informationsdaten übertragen werden, wobei die Informationsdaten mit den ermittelten Standortdaten in der Zentraleinheit (4) automatisch verknüpft werden, und wobei die Informationsdaten von der Zentraleinheit (4) standortbezogen zur Verfügung gestellt werden (10), derart, dass diese standortbezogenen Informationsdaten von der Zentraleinheit (4) wenigstens einem anderen Nutzer (12) des Informations-Übertragungssystems (1) zur Verfügung gestellt werden (10), wenn dieser Nutzer (12) über die ihm zugeordnete(n) Endeinrichtung(en) (5) die Standortdaten eines Standortes der Zentraleinheit (4) übermittelt
**dadurch gekennzeichnet,**
**dass** die standortbezogenen Informationsdaten entweder automatisch von der Zentraleinheit (4) an die Endeinrichtung(en) (5) übermittelt werden (10), sog. "Push-Verfahren", oder durch die Endeinrichtung(en) (5) angefordert und dann von der Zentraleinheit (4) übermittelt werden (10), sog. "Pull-Verfahren", wobei der Nutzer unter Zuhilfenahme seiner Endeinrichtung (5) zwischen dem "Push-Verfahren" und dem "Pull-Verfahren" wählt.

3. Verfahren gemäß Anspruch 1 oder 2, **dadurch gekennzeichnet, dass** von dem Absender (11) der standortbezogenen Informationsdaten ein Absenderprofil, welches absenderspezifische Daten enthält, erzeugt wird.

4. Verfahren gemäß zumindest einem der vorherigen Ansprüche, **dadurch gekennzeichnet, dass** von dem Absender (11) der standortbezogenen Informationsdaten ein Empfängerprofil, durch das der Absender (11) vorgibt für welche Empfänger die standortbezogenen Informationsdaten vorgesehen sind, erzeugt wird.

5. Verfahren gemäß zumindest einem der vorherigen Ansprüche, **dadurch gekennzeichnet, dass** eine automatische Übermittlung der standortbezogenen Informationsdaten im "Push-Verfahren" (10) an die Endeinrichtung(en) (5) eine vorherige generelle Aktivierung (9) der Zentraleinheit (4) erfordert.

6. Verfahren gemäß zumindest einem der vorherigen Ansprüche, **dadurch gekennzeichnet, dass** eine Übermittlung der standortbezogenen Informationsdaten im "Pull-Verfahren" (10) an die Endeinrichtung(en) (5) jeweils eine gesonderte Aktivierung (9) der Zentraleinheit (4) erfordert.

7. Verfahren gemäß einem der Ansprüche 5 oder 6, **dadurch gekennzeichnet, dass** mit Aktivierung (9) der Zentraleinheit (4) ein Nutzerprofil mit an die Zentraleinheit (4) übermittelt wird, welches vorgibt welche spezifischen standortbezogenen Informationsdaten der Nutzer (12) beziehen möchte.

8. Verfahren gemäß einem der Ansprüche 5 oder 6, **dadurch gekennzeichnet, dass** mit Aktivierung (9) der Zentraleinheit (4) ein Nutzerprofil von der Zentraleinheit (4) aus wenigstens einer Speichereinrichtung ausgewählt werden kann, welches vorgibt, welche spezifischen standortbezogenen Informationen der Nutzer (12) beziehen möchte.

9. Verfahren gemäß zumindest einem der vorherigen Ansprüche, **dadurch gekennzeichnet, dass** sich der Nutzer (12) vor Erhalt von standortbezogenen Informationsdaten bei der Zentraleinheit (4) registrieren lassen muss, insbesondere ein persönliches Profil angeben muss.

10. Verfahren gemäß zumindest einem der vorherigen Ansprüche, **dadurch gekennzeichnet, dass** die standortbezogenen Informationsdaten dem/den Nutzer(n) (12) erst dann von der Zentraleinheit (4) zugestellt werden (10), wenn sie sich bei der Zentraleinheit (4) registriert haben lassen, wenn die Zentraleinheit (4) von ihnen aktiviert (9) worden ist und wenn sie sich entweder an demselben Standort (2) aufhalten, wo auch die standortbezogenen Informationsdaten vom Absender (11) übertragen wurden oder sie die Standortdaten eines Standorts (2) an die Zentraleinheit (4) übermittelt haben.

11. Verfahren gemäß Anspruch 10, soweit auf einen der Ansprüche7 bis 9 rückbezogen, **dadurch gekennzeichnet, dass** die standortbezogenen Informationsdaten dem/den Nutzer(n) (12) erst dann von der Zentraleinheit (4) zugestellt werden (10), wenn Nutzerprofil und Empfängerprofil ganz oder zumindest in einem gewissen Grad übereinstimmen.

12. Verfahren gemäß zumindest einem der Ansprüche 7 bis 11, **dadurch gekennzeichnet, dass** der Absender (11) und der Nutzer (12) den Grad der Übereinstimmung zwischen Nutzerprofil und Empfängerprofil bestimmen kann, ab dem die standortbezogenen Informationsdaten von der Zentraleinheit (4) übermittelt werden sollen.

13. Verfahren gemäß zumindest einem der vorherigen Ansprüche, **dadurch gekennzeichnet, dass** vom Absender (11) und vom Nutzer (12) bestimmt werden kann, ab welcher räumlichen Entfernung zum jeweiligen Standort (2) die standortbezogenen Informationsdaten übermittelt werden.

14. Verfahren gemäß zumindest einem der Ansprüche 4 bis 13, **dadurch gekennzeichnet, dass** der Absender (11) jederzeit das Empfängerprofil und der Nutzer (12) jederzeit das Nutzerprofil ändern kann.

15. Verfahren gemäß zumindest einem der vorherigen Ansprüche, **dadurch gekennzeichnet, dass** der Absender (11) der standortbezogenen Informationsdaten den Zeitraum bestimmen kann, innerhalb dessen diese von der Zentraleinheit (4) an andere Nutzer (12) übermittelt werden können.

16. Verfahren gemäß zumindest einem der vorherigen Ansprüche, **dadurch gekennzeichnet, dass** der Nutzer (12), der die standortbezogenen Informationsdaten empfangen möchte, bestimmen kann, von welchem Zeitraum und in welchem Zeitraum er die standortbezogenen Informationsdaten empfangen möchte.

17. Verfahren gemäß zumindest einem der vorherigen Ansprüche, **dadurch gekennzeichnet, dass** Absender (11) und Nutzer (12) bestimmen können, für wen beziehungsweise von wem die standortbezogenen Informationsdaten übermittelt werden sollen.

18. Verfahren gemäß zumindest einem der vorherigen Ansprüche, **dadurch gekennzeichnet, dass** Absender (11) und Nutzer (12) ein oder mehrere Empfänger- beziehungsweise Nutzerprofil(e) an die Zentraleinheit (4) übermitteln können, die sie wahlweise einzeln oder gleichzeitig aktivieren (9) können.

19. Verfahren gemäß zumindest einem der Ansprüche 3 bis 18, **dadurch gekennzeichnet, dass** Absender (11) und Nutzer (12) jederzeit auf in der Zentraleinheit (4) gespeicherte Profile von Ihnen zurückgreifen können, um eine vereinfachte neue Eingabe beziehungsweise Abfrage durchführen zu können.

20. Verfahren gemäß zumindest einem der Ansprüche 3 bis 19, **dadurch gekennzeichnet, dass** alle Profile der Absender (11) und der Nutzer (12) des Informations-Übertragungssystems (1) über eine Internetverbindung an die Zentraleinheit (4) des Informations-Übertragungssystems (1) übermittelt werden können.

21. Verfahren gemäß zumindest einem der vorherigen Ansprüche, **dadurch gekennzeichnet, dass** alle standortbezogenen Informationsdaten nachträglich von Ihrem Absender (11) über eine Internetverbindung ergänzt werden können.

22. Verfahren gemäß zumindest einem der vorherigen Ansprüche, **dadurch gekennzeichnet, dass** die standortbezogenen Informationsdaten Sprach-, SMS-, MMS-, Bild-, Video-, Text-, WAP-Nachrichten sind.

23. Vorrichtung zur ortsabhängigen mobilen Kommunikation von Nutzern (11, 12) eines Informations-Übertragungssystems (1), insbesondere eines Mobilfunksystems, wobei jedem Nutzer (11, 12) zumindest zeitweilig wenigstens eine mobile Endeinrichtung (3, 5) zugeordnet ist, **dadurch gekennzeichnet, dass** diese Vorrichtung Mittel zur Durchführung des Verfahrens nach einem der Ansprüche 1 bis 22 aufweist.

24. Vorrichtung nach Anspruch 23, **dadurch gekennzeichnet, dass** die Vorrichtung ein Informations-Übertragungssystem (1), insbesondere eine Zentraleinheit (4), eine Vorrichtung zum Lokalisieren von Absendern (11) von standortbezogenen Informationsdaten sowie zum Lokalisieren von Nutzern (12) des Informations-Übertragungssystems (1), zumindest einen Speicher für Registrierungen und Profile der Absender (11) beziehungsweise Nutzer (12) sowie eine Recheneinheit, die bei Übereinstimmung von Empfänger- und Nutzerprofilen dem Nutzer (12) die standortbezogenen Informationsdaten zuordnet, wenn für die Endeinrichtung des Nutzers (12) über ein Standort-Ermittlungsverfahren der gleiche Standort (2) oder ein Ort in der Umgebung des Standorts ermittelt worden ist, über den die standortbezogenen Informationsdaten hinterlegt sind, aufweist.

25. Vorrichtung nach Anspruch 23 oder 24 sowie zur Durchführung des Verfahrens gemäß zumindest einem der vorherigen Ansprüche 1 bis 22, **dadurch gekennzeichnet, dass** die Endeinrichtungen (3, 5) Mobiltelefone sind.

## Claims

1. Method for location-dependent mobile communication of users (11, 12) of an information transmission system (1), particularly a mobile telephone system, wherein at least one mobile terminal device (3, 5) is at least intermittently associated with each user (11, 12), wherein one or more users/senders (11) electronically generate(s) information data and these are transmitted via the terminal device(s) associated with them to at least one central unit (4), wherein the location (2) of the particular terminal device(s) from which the information data are being transmitted is determined automatically by a location-detecting method, wherein the information data are automatically linked to the determined location data in the central unit (4), and wherein the information data are made available by the central unit (4), in location-based manner, such that these location-based information data are made available by the central unit (4) to at least one other user (12) of the information transmission system (1) if the same location (2) or a location in the vicinity of the location of the terminal device(s) (3) of the sender(s) (11) through which the information data has been deposited has been detected (8) for the terminal device of this user by the location detecting method, **characterised in that** the location-based information data are either automatically transmitted (10) from the central unit (4) to the terminal device(s) (5), the so-called push method, or are demanded by the terminal device(s) (5) and then transmitted (10) from the central unit (4), the so-called pull method, wherein the user chooses between the push method and the pull method using his terminal device (5).

2. Method for location-dependent mobile communication of users (11, 12) of an information transmission system (1), particularly a mobile telephone system, wherein at least one mobile terminal device (3, 5) is at least intermittently associated with each user (11, 12), wherein one or more users/senders (11) electronically generate(s) information data and these are transmitted via the terminal device(s) associated with them to at least one central unit (4), wherein the location (2) of the particular terminal device(s) from which the information data are being transmitted is determined automatically by a location-detecting method, wherein the information data are automatically linked to the determined location data in the central unit (4), and wherein the information data are made available by the central unit (4), in location-based manner, such that these location-based information data are made available by the central unit (4) to at least one other user (12) of the information transmission system (1) if this user (12) transmits the location data of a location to the central unit (4) via the terminal device(s) associated with them, **characterised in that** the location-based information data are either automatically transmitted (10) from the central unit (4) to the terminal device(s) (5), the so-called push method, or are demanded by the terminal device(s) (5) and then transmitted (10) from the central unit (4), the so-called pull method, wherein the user chooses between the push method and the pull method using his terminal device (5).

3. Method according to claim 1 or 2, **characterised in that** a sender profile which contains sender-specific data is generated by the sender (11) of the location-based information data.

4. Method according to at least one of the preceding claims, **characterised in that** a receiver profile by means of which the sender (11) specifies the receivers for which the location-based information data are intended is generated by the sender (11) of the location-based information data.

5. Method according to at least one of the preceding claims, **characterised in that** automatic transmission of the location-based information data by the push method (10) to the terminal device(s) (5) requires general activation (9) of the central unit (4) beforehand.

6. Method according to at least one of the preceding claims, **characterised in that** transmission of the location-based information data by the pull method (10) to the terminal device(s) (5) requires a separate activation (9) of the central unit (4) in each case.

7. Method according to one of claims 5 or 6, **characterised in that** by activation (9) of the central unit (4) a user profile is transmitted to the central unit (4) which determines which specific location-based information data the user (12) would like to obtain.

8. Method according to one of claims 5 or 6, **characterised in that** by activation (9) of the central unit (4) a user profile can be selected by the central unit (4) from at least one memory which determines which specific location-based information the user (12) would like to obtain.

9. Method according to at least one of the preceding claims, **characterised in that** the user (12) has to register with the central unit (4), and in particular has to submit a personal profile, before obtaining location-based information data.

10. Method according to at least one of the preceding claims, **characterised in that** the location-based information data are only sent to the user(s) by the central unit (4) when they have registered with the central unit (4), when the central unit (4) has been activated (9) by them and when they have either stopped at the same location (2) where the location-based information data has also been transmitted from the sender (11) or when they have transmitted the location data of a location (2) to the central unit (4).

11. Method according to claim 10, where it is dependent on one of claims 7 to 9, **characterised in that** the location-based information data are not supplied (10) to the user(s) (12) by the central unit (4) until the user profile and receiver profile agree totally or at least to a certain extent.

12. Method according to at least one of claims 7 to 11, **characterised in that** the sender (11) and the user (12) are able to determine the degree of correspondence between the user profile and the receiver profile based on which the location-based information data are to be transmitted from the central unit (4).

13. Method according to at least one of the preceding claims, **characterised in that** the sender (11) and the user (12) can determine from which spatial distance from the respective location (2) the location-based information data are transmitted.

14. Method according to at least one of claims 4 to 13, **characterised in that** the sender (11) can amend the receiver profile at any time and the user (12) can amend the user profile at any time.

15. Method according to at least one of the preceding claims, **characterised in that** the sender (11) of the location-based information data can determine the period within which these data can be transmitted from the central unit (4) to other users (12).

16. Method according to at least one of the preceding claims, **characterised in that** the user (12) who wishes to receive the location-based information data can specify the period from when and within which he would like to receive the location-based information data.

17. Method according to at least one of the preceding claims, **characterised in that** the sender (11) and user (12) can determine for whom or from whom the location-based information data are to be transmitted.

18. Method according to at least one of the preceding claims, **characterised in that** the sender (11) and user (12) can transmit one or more receiver or user profile(s) to the central unit (4), which they can activate (9) individually or simultaneously, as desired.

19. Method according to at least one of claims 3 to 18, **characterised in that** the sender (11) and user (12) can access their profiles stored in the central unit (4) at any time in order to carry out a simplified new input or enquiry.

20. Method according to at least one of claims 3 to 19, **characterised in that** all the profiles of the senders (11) and the users (12) of the information transmission system (1) can be sent to the central unit (4) of the information transmission system (1) via an internet connection.

21. Method according to at least one of the preceding claims, **characterised in that** all the location-based information data can subsequently be supplemented by their sender (11) via an internet connection.

22. Method according to at least one of the preceding claims, **characterised in that** the location-based information data are voice, SMS, MMS, image, video, text or WAP messages.

23. Apparatus for the location-dependent mobile communication of users (11, 12) of an information transmission system (1), particularly a mobile telephone system, wherein at least one mobile terminal device (3, 5) is at least intermittently associated with each user (11, 12), **characterised in that** this apparatus comprises means for carrying out the process according to one of claims 1 to 22.

24. Apparatus according to claim 23, **characterised in that** the apparatus comprises an information transmission system (1), particularly a central unit (4), a device for locating senders (11) of location-based information data and for locating users (12) of the information transmission system (1), at least one memory for storing registrations and profiles of the senders (11) or users (12) and a computer unit which assigns the location-based information data to the user (12) when the receiver and user profiles agree, when the same location (2) or a location in the vicinity of the location through which the location-based information data have been deposited has been detected for the terminal device of the user (12) by means of a location detecting process.

25. Apparatus according to claim 23 or 24 and for carrying out the process according to at least one of the preceding claims 1 to 22, **characterised in that** the terminal devices (3, 5) are mobile telephones.

## Revendications

1. Procédé de communication mobile dépendant du lieu d'utilisateurs (11, 12) d'un système de transmission d'informations (1), en particulier d'un système de téléphonie mobile, au moins un terminal mobile (3, 5) étant attribué au moins temporairement à chaque utilisateur (11, 12), un ou plusieurs utilisateur(s)/expéditeur(s) (11) générant des données d'information de manière électronique et celles-ci étant transmises (6) à au moins une unité centrale (4) via le(s) terminal/terminaux (3) qui lui/leur est/sont associé(s), le site (2) du/des terminal/terminaux à partir duquel/desquels les données d'information sont transmises étant automatiquement déterminé (7) via un procédé de détermination de site, les données d'information étant automatiquement associées dans l'unité centrale (4) aux données de site déterminées et les données d'information étant mises à disposition (10) par l'unité centrale (4) de manière liée au site, de sorte que ces données d'information liées au site sont mises à la disposition (10) d'au moins un autre utilisateur (12) du système de transmission d'informations (1) par l'unité centrale (4), si le même site (2) que pour le/les terminal/terminaux (3) de l'expéditeur/des expéditeurs (11) et/ou un lieu dans le voisinage dudit site a été déterminé (8) pour le terminal de cet utilisateur via le procédé de détermination de site, site sur lequel sont déposées les données d'information.
**caractérisé en ce que**
les données d'information liées au site sont soit transmises (10) automatiquement au(x) terminal/terminaux (5) par l'unité centrale (4), procédé dit « push », soit sont demandées par le(s) terminal/terminaux (5) pour être ensuite transmises (10) par l'unité centrale (4), procédé dit « pull », l'utilisateur choisissant à l'aide de son terminal (5) entre le « procédé push » et le « procédé pull ».

2. Procédé de communication mobile dépendant du lieu d'utilisateurs (11, 12) d'un système de transmission d'informations (1), en particulier d'un système de téléphonie mobile, au moins un terminal mobile (3, 5) étant attribué au moins temporairement à chaque utilisateur (11, 12), un ou plusieurs utilisateur(s)/expéditeur(s) (11) générant des données d'information de manière électronique et celles-ci étant transmises (6) à au moins une unité centrale (4) via le(s) terminal/terminaux (3) qui lui/leur est/sont attribué(s), le site (2) du/des terminal/terminaux à partir duquel/desquels les données d'information sont transmises (6) étant automatiquement déterminé (7) via un procédé de détermination de site, les données d'information étant automatiquement associées dans l'unité centrale (4) aux données de site déterminées et les données d'information étant mises à disposition (10) par l'unité centrale (4) de manière liée au site, de sorte que ces données d'information liées au site sont mises à la disposition (10) d'au moins un autre utilisateur (12) du système de transmission d'informations (1) par l'unité centrale (4), si cet utilisateur (12) transmet les données de site d'un site de l'unité centrale (4) via le(s) terminal/terminaux (5) qui lui est/sont attribué(s).
**caractérisé en ce que**
les données d'information liées au site sont soit transmises (10) automatiquement au(x) terminal/terminaux (5) par l'unité centrale (4), procédé dit « push », soit sont demandées par le(s) terminal/terminaux (5), puis transmises (10) par l'unité centrale (4), procédé dit « pull », l'utilisateur choisissant à l'aide de son terminal (5) entre le « procédé push » et le « procédé pull ».

3. Procédé selon la revendication 1 ou 2, **caractérisé en ce qu'**un profil d'expéditeur qui contient des données spécifiques à l'expéditeur est généré par l'expéditeur (11) des données d'information liées au site.

4. Procédé selon au moins l'une quelconque des revendications précédentes, **caractérisé en ce qu'**un profil de destinataire, par lequel l'expéditeur (11) spécifie pour quels destinataires sont prévues les données d'information liées au site, est généré par l'expéditeur (11) des données d'information liées au site.

5. Procédé selon au moins l'une quelconque des revendications précédentes, **caractérisé en ce qu'**une transmission automatique des données d'information liées au site au(x) terminal/terminaux (5) avec le « procédé push » (10) nécessite au préalable une activation générale (9) de l'unité centrale (4).

6. Procédé selon au moins l'une quelconque des revendications précédentes, **caractérisé en ce qu'**une transmission des données d'information liées au site au(x) terminal/terminaux (5) avec le « procédé pull » (10) nécessite respectivement une activation séparée (9) de l'unité centrale (4).

7. Procédé selon l'une quelconque des revendications 5 ou 6, **caractérisé en ce que**, lors de l'activation (9) de l'unité centrale (4), un profil d'utilisateur est transmis en même temps à l'unité centrale (4), qui spécifie quelles données d'information spécifiques liées au site l'utilisateur (12) souhaite recevoir.

8. Procédé selon l'une quelconque des revendications 5 ou 6, **caractérisé en ce que**, lors de l'activation (9) de l'unité centrale (4), un profil d'utilisateur peut être sélectionné par l'unité centrale (4) parmi au moins un dispositif mémoire, qui spécifie quelles informations spécifiques liées au site l'utilisateur (12) souhaite recevoir.

9. Procédé selon au moins l'une quelconque des revendications précédentes, **caractérisé en ce que** l'utilisateur (12) doit se faire enregistrer auprès de l'unité centrale (4) avant l'obtention de données d'information liées au site, et doit en particulier indiquer un profil personnel.

10. Procédé selon au moins l'une quelconque des revendications précédentes, **caractérisé en ce que** les données d'information liées au site sont remises (10) à l'utilisateur/aux utilisateurs (12) par l'unité centrale (4) uniquement si ceux-ci se sont fait enregistrer auprès de l'unité centrale (4), si l'unité centrale (4) a été activée (9) par ceux-ci et s'ils se trouvent soit sur le même site (2) que celui où les données d'information liées au site ont également été transmises par l'expéditeur (11), soit s'ils ont transmis les données de site d'un site (2) à l'unité centrale (4).

11. Procédé selon la revendication 10, sous réserve d'une mise en relation avec l'une quelconque des revendications 7 à 9, **caractérisé en ce que** les données d'information liées au site sont remises (10) à l'utilisateur/aux utilisateurs (12) par l'unité centrale (4) uniquement si le profil d'utilisateur et le profil de destinataire concordent totalement ou au moins dans une certaine mesure.

12. Procédé selon au moins l'une quelconque des revendications 7 à 11, **caractérisé en ce que** l'expéditeur (11) et l'utilisateur (12) peuvent déterminer le degré de concordance entre le profil d'utilisateur et le profil de destinataire, à partir duquel les données d'information liées au site doivent être transmises par l'unité centrale (4).

13. Procédé selon au moins l'une quelconque des revendications précédentes, **caractérisé en ce que** l'expéditeur (11) et l'utilisateur (12) peuvent déterminer à partir de quelle distance dans l'espace par rapport au site particulier (2) les données d'information liées au site sont transmises.

14. Procédé selon au moins l'une quelconque des revendications 4 à 13, **caractérisé en ce que** l'expéditeur (11) peut modifier à tout moment le profil de destinataire et l'utilisateur (12) peut modifier à tout moment le profil d'utilisateur.

15. Procédé selon au moins l'une quelconque des revendications précédentes, **caractérisé en ce que** l'expéditeur (11) des données d'information liées au site peut déterminer la période au sein de laquelle celles-ci peuvent être transmises par l'unité centrale (4) à d'autres utilisateurs (12).

16. Procédé selon au moins l'une quelconque des revendications précédentes, **caractérisé en ce que** l'utilisateur (12) qui souhaite recevoir les données d'information liées au site peut déterminer à partir de quelle période et la période au cours de laquelle il souhaite recevoir les données d'information liées au site.

17. Procédé selon au moins l'une quelconque des revendications précédentes, **caractérisé en ce que** l'expéditeur (11) et l'utilisateur (12) peuvent déterminer à l'attention de qui ou en provenance de qui les données d'information liées au site doivent être transmises.

18. Procédé selon au moins l'une quelconque des revendications précédentes, **caractérisé en ce que** l'expéditeur (11) et l'utilisateur (12) peuvent transmettre à l'unité centrale (4) un ou plusieurs profil(s) de destinataire ou d'utilisateur, qu'ils peuvent activer (9) facultativement de manière séparée ou simultanée.

19. Procédé selon au moins l'une quelconque des revendications 3 à 18, **caractérisé en ce que** l'expéditeur (11) et l'utilisateur (12) peuvent à tout moment accéder de nouveau à des profils mémorisés par eux dans l'unité centrale (4) pour pouvoir réaliser une nouvelle entrée simplifiée ou une interrogation.

20. Procédé selon au moins l'une quelconque des revendications 3 à 19, **caractérisé en ce que** tous les profils des expéditeurs (11) et des utilisateurs (12) du système de transmission d'informations (1) peuvent être transmis à l'unité centrale (4) du système de transmission d'informations (1) par une connexion Internet.

21. Procédé selon au moins l'une quelconque des revendications précédentes, **caractérisé en ce que** toutes les données d'information liées au site peuvent être complétées ultérieurement par leur expéditeur (11) par une connexion Internet.

22. Procédé selon au moins l'une quelconque des revendications précédentes, **caractérisé en ce que** les données d'information liées au site sont des messages vocaux, SMS, MMS, image, vidéo, texte ou WAP.

23. Dispositif de communication mobile dépendant du lieu d'utilisateurs (11, 12) d'un système de transmission d'informations (1), en particulier d'un système de téléphonie mobile, au moins un terminal mobile (3, 5) étant attribué au moins temporairement à chaque utilisateur (11, 12), **caractérisé en ce que** ce dispositif présente des moyens pour réaliser le procédé selon l'une quelconque des revendications 1 à 22.

24. Dispositif selon la revendication 23, **caractérisé en ce que** le dispositif comprend un système de transmission d'informations (1), en particulier une unité centrale (4), un dispositif pour la localisation d'expéditeurs (11) de données d'information liées au site ainsi que pour la localisation d'utilisateurs (12) du système de transmission d'informations (1), au moins une mémoire pour les enregistrements et profils respectivement des expéditeurs (11) et des utilisateurs (12), ainsi qu'une unité de calcul qui, en cas de concordance des profils de destinataire et d'utilisateur, attribue à l'utilisateur (12) les données d'information liées au site si le même site (2) ou un lieu dans le voisinage du site a été déterminé pour le terminal de l'utilisateur (12) via un procédé de détermination de site, site sur lequel sont déposées les données d'information liées au site.

25. Dispositif selon la revendication 23 ou 24, ainsi que pour l'exécution du procédé selon au moins l'une quelconque des revendications précédentes 1 à 22, **caractérisé en ce que** les terminaux (3, 5) sont des téléphones mobiles.
